# FASCICULE DE BREVET EUROPEEN

(11) **EP 2 442 164 B1**
(45) Date de publication et mention de la délivrance du brevet: **09.08.2017**
(21) Numéro de dépôt: 11184712.5
(22) Date de dépôt: 11.10.2011
(51) Int. Cl.: G02B 6/12, G02B 6/42, G02B 6/30, G02B 6/293

(54) **Procédé de fabrication d'un duplexeur optique**
Verfahren zur Herstellung eines optischen Duplexers
Process for manufacturing an optical duplexer

(30) Priorité: 12.10.2010 FR 1058255
(43) Date de publication de la demande: 18.04.2012
(73) Titulaire: Commissariat à l'Énergie Atomique et aux Énergies Alternatives, 75015 Paris (FR)
(72) Inventeur: Kopp, Christophe, 38120 Fontanil-Cornillon (FR); Bernabe, Stéphane, 38430 Moirans (FR); Grosse, Philippe, 38360 Sassenage (FR)
(74) Mandataire: de Beaumont, Michel

(56) Documents cités:
- WO-A1-2005/012972
- US-A- 4 760 569
- US-A1- 2010 092 128

## Description

### Domaine de l'invention

La présente invention concerne le domaine des réseaux optiques de télécommunication, et plus particulièrement les duplexeurs, c'est-à-dire des terminaux aptes à recevoir un signal optique à une première longueur d'onde optique et à réémettre de façon contrôlée des signaux optiques à une seconde longueur d'onde optique.

De tels dispositifs sont par exemple utilisés dans des réseaux de télécommunication, pour recevoir au niveau d'un terminal d'abonné une communication en provenance d'un serveur par l'intermédiaire d'une fibre optique et pour envoyer vers la fibre optique en direction du serveur des signaux de réponse adaptés.

### Arrière-plan technique

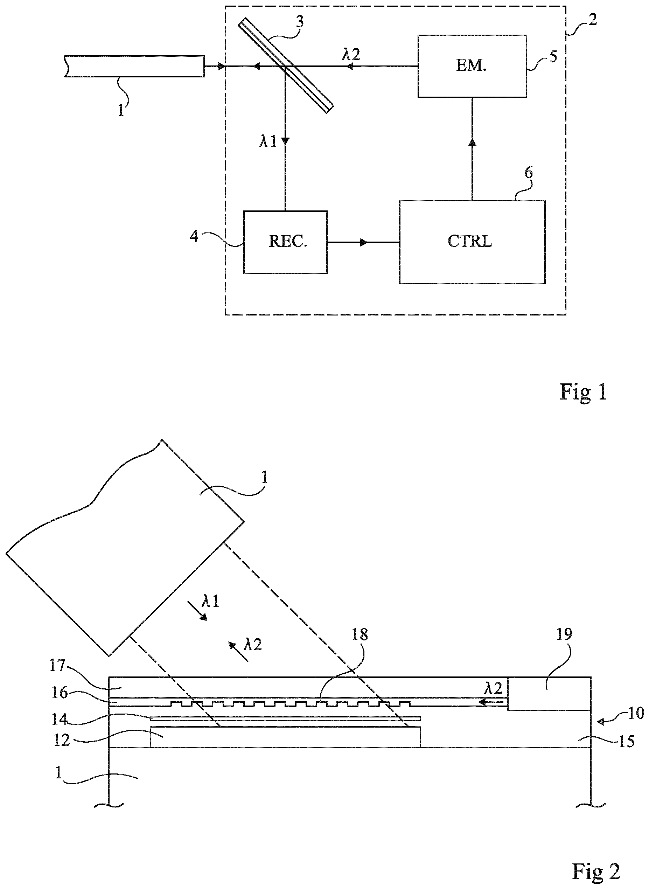

Comme l'illustre la figure 1, de tels duplexeurs ont initialement été réalisés à l'aide de composants discrets. Un signal optique à une première longueur d'onde optique λ1, par exemple 1,5 µm, est envoyé par une fibre optique 1 en direction d'un terminal d'abonné 2. Ce terminal d'abonné comprend une séparatrice renvoyant le signal optique à la première longueur d'onde optique vers un récepteur (REC) 4. Le terminal d'abonné comprend également un émetteur (EM) 5, éventuellement commandé par un circuit électronique de contrôle 6, connecté au récepteur 4 pour renvoyer dans la fibre optique à travers la séparatrice 3 un faisceau à une seconde longueur d'onde optique λ2, par exemple 1,3 µm.

Avec le développement des circuits intégrés optiques, microphotoniques puis nanophotoniques, on a tenté de réaliser l'ensemble du terminal de données 2 sous forme d'un composant optique intégré monolithique. Il se pose alors divers problèmes de couplage entre le signal provenant de la fibre optique et le récepteur, et de couplage du faisceau réémis vers la fibre optique. En outre, il se pose un problème de diaphotie, c'est-à-dire qu'il existe un risque qu'une partie au moins du faisceau réémis soit envoyé vers le récepteur, perturbant les indications de celui-ci.

Divers circuits intégrés optiques ont été prévus dans l'art antérieur et sont basés pour l'essentiel sur des systèmes à séparation de polarisation. Néanmoins, ces systèmes présentent un très mauvais rendement. De façon générale, ils présentent un rendement de couplage entre un faisceau incident et un faisceau transmis qui est difficilement supérieur à 20 %.

Ainsi, il existe un besoin de duplexeurs efficaces réalisés sous forme de circuits intégrés optiques. Les documents US 2010/092128 A1, WO 2005/012972 A1 et US 4 760 569 A sont des exemples pour l'art antérieur.

### Résumé

Un objet de modes de réalisation de la présente invention est de prévoir un procédé de fabrication d'un duplexeur réalisé sous forme de circuit intégré optique présentant un rendement de couplage satisfaisant.

Ainsi, un mode de réalisation de la présente invention prévoit un procédé de fabrication d'un duplexeur optique tel que revendiqué en revendication 1.

Selon un mode de réalisation de la présente invention, le filtre comprend une alternance de couches à haut et bas indice.

Selon un mode de réalisation de la présente invention, les couches à haut et bas indice sont des couches de silicium et d'oxyde de silicium.

Selon un mode de réalisation de la présente invention, le guide d'onde comprend un coeur de silicium entouré d'oxyde de silicium.

Selon un mode de réalisation de la présente invention, le duplexeur comprend un émetteur laser couplé au guide d'onde optique.

Selon un mode de réalisation de la présente invention, le duplexeur intègre dans le substrat des composants électronniques propres à commander l'émetteur en fonction des signaux reçus par le photorécepteur.

### Brève description des dessins

Ces objets, caractéristiques et avantages, ainsi que d'autres, seront exposés en détail dans la description suivante de modes de réalisation particuliers faite à titre non-limitatif en relation avec les figures jointes parmi lesquelles :
la figure 1, décrite précédemment représente un duplexeur constitué de composants discrets ;
la figure 2 est une vue en coupe schématique d'un circuit intégré optique constituant un mode de réalisation d'un duplexeur; et
les figures 3A et 3B illustrent un exemple de procédé de fabrication d'un duplexeur du type de celui de la figure 2.

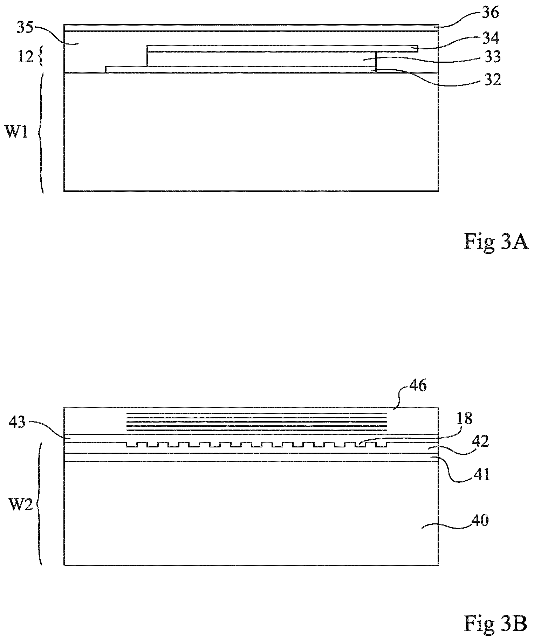

De façon classique, dans la représentation des micro-composants des figures 2, 3A et 3B, les échelles sont arbitrairement dilatées ou rétrécies pour rendre les figures plus lisibles.

### Description détaillée

La figure 2 représente une fibre optique 1 envoyant un faisceau optique à une première longueur d'onde optique λ1 vers un circuit intégré optique constituant un duplexeur 10. Cette fibre optique est également destinée à recevoir un faisceau optique réémis à une seconde longueur d'onde optique λ2 par le duplexeur 10.

Ce duplexeur comprend, sur un substrat 1, un photorécepteur 12. Le substrat peut être une partie d'une tranche de silicium dans laquelle sont formées par ailleurs divers circuits intégrés électroniques destinés au traitement des informations. Ce photorécepteur est surmonté d'un filtre optique sélectif 14 adapté à laisser passer la première longueur d'onde optique et à ne pas transmettre la seconde longueur d'onde optique. Un milieu neutre, par exemple de l'oxyde de silicium 15 entoure l'ensemble du filtre optique 14 et du photorécepteur 12 et une partie de ce milieu est éventuellement insérée entre le photorécepteur 12 et le filtre 14. Au-dessus de la couche 15 est formée une couche délimitée pour définir le coeur 16 d'un guide d'onde optique surmonté d'une couche neutre 17, par exemple de l'oxyde de silicium. L'ensemble des couches 15 et 17 constitue la gaine optique du guide d'onde. Une face du coeur du guide d'onde 16, ici la face inférieure, est gravée en un réseau 18 pour entraîner qu'un faisceau envoyé dans ce guide d'onde à une seconde longueur d'onde optique λ2, par exemple par un laser 19, est réémis dans la direction de la fibre optique 1. En outre, ce réseau est "transparent" pour la longueur d'onde λ1. Ainsi, le faisceau à la première longueur d'onde optique λ1 émis par la fibre optique 1 traverse, pratiquement sans interférence, le guide d'onde 16 et le filtre 14 pour atteindre le photodétecteur 12. Inversement, la seconde longueur d'onde optique λ2 émise dans le guide d'onde 16 est renvoyée vers la fibre optique 1. D'éventuels rayonnements parasites dirigés vers le photorécepteur sont éliminés par le filtre 14.

La détermination d'un réseau 18, actif à la seconde longueur d'onde optique pour coupler le guide d'onde à la fibre 1 et n'interférant pas sur la première longueur d'onde optique peut être effectuée en ce qui concerne ses divers paramètres (période, profondeur de gravure...) par des procédés connus. On pourra par exemple pour déterminer les paramètres du réseau et la distance du filtre sur le réseau utiliser une optimisation numérique à différence finie dans le domaine temporel (FDTD : Finite-Différence time-domain) tel que décrite dans l'article de C. Kopp. A. Chelnokov "Fiber grating couplers for silicon nanophotonic circuits ; Design modeling methodology and fabrication tolerances", Optics Communications 2009. Le procédé FDTD est exposé de façon générale sur internet à l'adresse "http://en.wikipedia.org/wiki/Finite-difference_time-domain_method".

Le filtre optique 14 peut être constitué de l'empilement d'une alternance de couches à haut et bas indice de réfraction. On pourra par exemple choisir la succession de couches de silicium (indice n ≈ 3,5) et de silice (indice n ≈ 1,5) dont les épaisseurs sont données ci-après pour le cas où la première longueur d'onde λ1 est de l'ordre de 1,5 µm et la deuxième longueur d'onde λ2 est de l'ordre de 1,3 µm, dans le cadre de deux exemples.
- Premier exemple de couches de filtre successives :
   Si : 195 nm
   SiO₂ : 203 nm
   Si : 84 nm
   SiO₂ : 182 nm
   Si : 64 nm
   SiO₂ : 138 nm
   Si : 71 nm
   SiO₂ : 231 nm, et
   Si : 96 nm.
- Deuxième exemple de couches de filtre successives :
   SiO₂ : 211 nm
   Si : 85 nm
   SiO₂ : 214 nm
   Si : 50 nm
   SiO₂ : 143 nm
   Si : 77 nm
   SiO₂ : 253 nm, et
   Si : 78 nm.

On a pu déterminer que, pour un filtre selon l'un ou l'autre de ces deux exemples, la réflectivité sur la bande d'émission (1,3 µm) est très élevée, de l'ordre de 99,4 % tandis que la réflectivité sur la bande de réception (1,5 µm) est très basse (inférieure à 15 %). Ainsi, ce filtre isolera optiquement la photodiode recevant le signal à 1,5 µm du faisceau réémis à 1,3 µm. Ce filtre renforcera l'efficacité de couplage du réseau vers la fibre à plus de 50 % si ce filtre est disposé environ 700 nm sous le réseau avec interposition de la couche de silice 15. Le filtre décrit est un filtre dichroïque et non pas un filtre de Bragg pour lequel l'épaisseur optique des couches successives serait de l'ordre de λ/4.

En ce qui concerne le guide d'onde et le réseau associé, on pourra utiliser la structure décrite ci-après. Typiquement, le guide et le réseau de couplage à 1,3 µm seront réalisés dans une couche de silicium (indice n = 3,47) enrobée de silice (indice n = 1,44). Avantageusement, cette couche sera quasi-transparente à 1,5 µm en respectant la condition de couche mince d'épaisseur λ/2. Ainsi, en notant TH l'épaisseur de cette couche TH = λ1/2n pour 1,5 µm.

On montre que le maximum de transmission à 1,5 µm est obtenu pour une épaisseur proche de 220 nm qui correspond à l'épaisseur sélectionnée. Typiquement, la largeur de ce guide sera de 500 nm. A partir de cette épaisseur, on définit les paramètres du réseau de couplage vers la fibre à 1,3 µm. On pourra choisir pour le pas ou période de réseau Λ = 480 à 560 nm, pour un facteur de gravure FF égal à 0,4 à 0,6 fois l'épaisseur. L'indice de réfraction du coeur 16 du guide d'onde en silicium est de 3,47. L'indice de réfraction de la gaine optique contrôlant le guide en silice est de 1,44, la profondeur de gravure sera de 50 à 120 nm.

D'autre part, le réseau aura des dimensions supérieures au diamètre du faisceau incident (environ 10 µm) pour une fibre optique monomode, soit par exemple 10x10 µm². Ainsi, pour Λ = 510 nm, FF = 0,5, profondeur de gravure de silicium 90 nm, on obtient une efficacité de couplage proche de 50 % avec un angle de couplage (angle de fibre par rapport à la normale au plan du réseau) égal à 10°, (ce qui ne correspond pas à l'angle illustré sur la figure).

Le photorécepteur 12 peut notamment être une photodiode à avalanche ou une photodiode de type PIN (ou NIP). Une photodiode de type PIN comprend une couche fortement dopée de type P, une couche quasi-intrinsèque et une couche fortement dopée de type N. Une diode NIP comprend des couches similaires avec une inversion des types de dopage. La couche intrinsèque pourra être en germanium, InP ou InGaAs. Les couches dopées (au bore et au phosphore) pourront être réalisées à partir de couches de germanium, de silicium, d'InP ou d'InGaAs. Typiquement, les diverses couches de la photodiode PIN seront circulaires et auront des diamètres supérieurs au diamètre du faisceau incident (environ 10 µm depuis la fibre monomode). Par exemple, on pourra prendre :
- pour la couche dopée supérieure, du silicium dopé au bore d'une épaisseur de 150 nm et d'un diamètre de 20 µm,
- pour la couche intrinsèque, du germanium d'une épaisseur de 500 nm et d'un diamètre de 20 nm,
- pour la couche dopée inférieure, du silicium dopé au phosphore d'une épaisseur de 150 nm et d'un diamètre de 30 µm (ce diamètre est supérieur aux autres pour permettre la reprise de contact sur la couche inférieure).

En ce qui concerne la source de lumière 19, il pourra s'agir d'une source laser commandée formée sur une puce d'arséniure de gallium ou de phosphure d'indium encastrée dans la partie supérieure du circuit intégré, de sorte que son faisceau soit dirigé vers le guide d'onde optique 16. Il pourra aussi s'agir d'une source externe. Cette source pourra être commandée par un circuit électronique intégré dans le substrat 1 et commandée par des signaux électroniques résultant notamment des signaux fournis par le photodétecteur 12.

Les figures 3A et 3B sont des vues en coupe destinées à illustrer un exemple de fabrication d'un duplexeur optique selon la présente invention.

Pour la réalisation de ce duplexeur sous forme de circuit intégré, on part d'un premier substrat W1, par exemple une tranche de silicium, sur lequel on forme une diode photo-détectrice PIN comprenant une couche inférieure 32 fortement dopée de type P, une couche centrale 33 à dopage intrinsèque, et une couche supérieure 34 fortement dopée de type N. L'ensemble de la structure est noyé dans une couche d'oxyde de silicium 35, éventuellement formée par portions successives au fur et à mesure que sont formées les couches 32, 33, 34. L'ensemble de la structure est de préférence revêtu d'une couche 36, par exemple du SiO₂, destinée à assurer le collage optique de la structure de la figure 3A sur la structure de la figure 3B retournée.

La structure de la figure 3B est par exemple formée à partir d'une tranche W2 de type silicium sur isolant (SOI) comprenant un substrat de silicium 40 revêtu d'une couche mince isolante 41, couramment en oxyde de silicium, et d'une couche mince de silicium 42. La surface supérieure de la couche de silicium 42 est gravée pour former le réseau 18 décrit précédemment. L'ensemble est revêtu d'une couche d'interface, par exemple une couche d'oxyde de silicium 43 et on forme ensuite une succession de dépôts tels que mentionnés précédemment à titre d'exemple pour former un filtre interférentiel. Les couches successives sont illustrées dans la figure sous forme de simples traits par souci de simplification. L'ensemble est revêtu d'une couche 46 d'accrochage.

Une fois les structures des figures 3A et 3B formées, la structure de la figure 3B est retournée et collée sur la structure de la figure 3A et le substrat 42 est éliminé. On arrive ainsi à la structure représentée en figure 2. Bien entendu, ceci ne constitue qu'un exemple de fabrication possible de la structure selon la présente invention.

Des modes de réalisation particuliers de la présente invention ont été décrits. Diverses variantes et modifications apparaîtront à l'homme de l'art. En particulier, on soulignera à nouveau que les épaisseurs ont été arbitrairement dilatées ou contractées dans les figures, mais pourront facilement être déterminées par l'homme de l'art en fonction de ses connaissances générales et des indications données ici. De plus, ce qui a été représenté en figures 2, 3A et 3B ne constitue éventuellement qu'une partie d'une structure plus large comprenant d'autres composants. Il sera également prévu, de façon classique, des reprises de connexion notamment sur la face supérieure et la face inférieure de la photodiode.

## Revendications

1. Procédé de fabrication d'un duplexeur optique destiné à recevoir de la lumière à une première longueur d'onde optique (λ1) et à réémettre de la lumière à une seconde longueur d'onde optique (λ2), comprenant les étapes suivantes :
former sur une première tranche de silicium (W1) un photorécepteur (12) de la première longueur d'onde optique (λ1) comprenant des régions semiconductrices successivement fortement dopées d'un premier type de conductivité (32), intrinsèque (33), et fortement dopées d'un second type de conductivité (34), et revêtir l'ensemble d'une couche plane d'adhérence,
former sur une deuxième tranche (W2) de type SOI, dans la couche de silicium supérieure de la structure SOI, un guide d'onde (16), adapté à recevoir de la lumière en provenance d'une source (19) à la seconde longueur d'onde optique, dont une face comprend un réseau transparent pour la première longueur d'onde optique (λ1) et diffractant pour la seconde longueur d'onde optique (λ2), et déposer des couches successives formant un filtre sélectif passant pour la première longueur d'onde optique et non transmetteur pour la seconde longueur d'onde optique, et revêtir l'ensemble d'une couche plane d'adhérence, et
coller la face opposée au substrat de la première tranche sur la face opposée au substrat de la deuxième tranche et éliminer le substrat de silicium de la deuxième tranche.

2. Procédé selon la revendication 1, dans lequel les couches planes d'adhérence sont des couches d'oxyde de silicium.

3. Procédé selon la revendication 1 ou 2, dans lequel lesdites couches du filtre sont des couches de silicium et d'oxyde de silicium.

4. Procédé selon l'une quelconque des revendications 1 à 3, dans lequel le guide d'onde comprend un coeur de silicium entouré d'oxyde de silicium

5. Procédé selon l'une quelconque des revendications 1 à 3, dans lequel comprenant l'étape consistant à encastrer dans la deuxième tranche une source laser commandée formée sur une puce d'arséniure de gallium ou de phosphure d'indium dans la partie supérieure du circuit intégré, de sorte que son faisceau soit dirigé vers le guide d'onde optique.

## Patentansprüche

1. Verfahren zur Herstellung eines optischen Duplexers, der Licht mit einer ersten optischen Wellenlänge (λ1) aufnehmen soll und Licht mit einer zweiten optischen Wellenlänge (λ2) zurück durchlassen soll, welches folgende Schritte aufweist:
Formen auf einem ersten Silizium-Wafer (W1) eines Fotorezeptors (12) der ersten optischen Wellenlänge (λ1), der Halbleiterbereiche aufweist, die aufeinanderfolgend stark dotiert mit einer ersten Leitfähigkeitsart (32), intrinsisch (33), und stark dotiert mit einer zweiten Leitfähigkeitsart (34) sind, und Beschichten der Anordnung mit einer ebenen Bindungs- bzw. Bonding-Schicht,
Formen eines zweiten Wafers (W2) des SOI-Typs in der oberen Siliziumschicht der SOI-Struktur, einer Wellenführung (16), die ausgebildet ist, um Licht von einer Quelle (19) mit der zweiten optischen Wellenlänge aufzunehmen, und zwar mit einer Oberfläche, die ein Gitter aufweist, welches für die erste optische Wellenlänge (λ1) transparent ist und für die zweite optische Wellenlänge (λ2) beugend ist, und Ablagern von aufeinanderfolgenden Schichten, die einen selektiven Filter formen, der die erste optische Wellenlänge durchlässt, und nicht die zweite optische Wellenlänge, und Beschichten der Anordnung mit einer ebenen Bonding-Schicht, und Verbinden der Oberfläche gegenüberliegend zum Substrat des ersten Wafers mit der Oberfläche gegenüberliegend zum Substrat des zweiten Wafers und Entfernen des Siliziumsubstrates des zweiten Wafers.

2. Verfahren nach Anspruch 1, wobei die ebenen Bonding-Schichten Siliziumoxidschichten sind.

3. Verfahren nach Anspruch 1 oder 2, wobei die Filterschichten Silizium- und Siliziumoxid-Schichten sind.

4. Verfahren nach einem der Ansprüche 1 bis 3, wobei die Wellenführung einen Siliziumkern aufweist, der mit Siliziumoxid umgeben ist.

5. Verfahren nach einem der Ansprüche 1 bis 3, welches den Schritt aufweist, in den zweiten Wafer eine gesteuerte Laserquelle einzubetten, die auf einem Galliumarsenid- oder Indiumphosphid-Chip geformt ist, und zwar im oberen Teil der integrierten Schaltung, so dass ihr Strahl zur optischen Wellenführung geleitet wird.

## Claims

1. A method for manufacturing an optical duplexer intended to receive light at a first optical wavelength (λ1) and to transmit back light at a second optical wavelength (λ2), comprising the steps of:
forming, on a first silicon wafer (W1), a photoreceptor (12) of the first optical wavelength (λ1), comprising semiconductor regions, successively heavily doped of a first conductivity type (32) intrinsic (33), and heavily doped of a second conductivity type (34), and coating the assembly with a planar bonding layer,
forming on a second SOI-type wafer (W2), in the upper silicon layer of the SOI structure, a waveguide (16) adapted to receive light from a source (19) at the second optical wave length, having a surface comprising a grating which is transparent for the first optical wavelength (λ1) and diffracting for the second optical wavelength (λ2), and depositing successive layers forming a selective filter letting through the first optical wavelength and not the second optical wavelength and coating the assembly with a planar bonding layer, and
bonding the surface opposite to the substrate of the first wafer to the surface opposite to the substrate of the second wafer and removing the silicon substrate of the second wafer.

2. The method of claim 1, wherein the planar bonding layers are silicon oxide layers.

3. The method of claim 1 or 2, wherein said filter layers are silicon and silicon oxide layers.

4. The method of any of claims 1 to 3, wherein the waveguide comprises a silicon core surrounded with silicon oxide.

5. The method of any of claims 1 to 3, comprising the step of embedding in the second wafer a controlled laser source formed on a gallium arsenide or indium phosphide chip in the upper part of the integrated circuit, so that its beam is directed towards the optical waveguide.
